# EUROPEAN PATENT SPECIFICATION

(11) **EP 2 394 467 B1**
(45) Date of publication and mention of the grant of the patent: **28.06.2017**
(21) Application number: 10704654.2
(22) Date of filing: 05.02.2010
(51) Int. Cl.: H04W 36/00

(54) **METHOD AND APPARATUS FOR MANAGING MOBILITY TRANSACTIONS AMONG FIXED/NOMADIC WIRELESS TERMINALS**
VERFAHREN UND VORRICHTUNG ZUR VERWALTUNG VON MOBILITÄTSTRANSAKTIONEN ZWISCHEN FESTEN/NOMADISCHEN DRAHTLOSEN ENDGERÄTEN
PROCÉDÉ ET APPAREIL DE GESTION DE TRANSACTIONS DE MOBILITÉ PARMI DES TERMINAUX SANS FIL FIXES/NOMADES

(30) Priority: 05.02.2009 US 206870 P; 04.02.2010 US 700401
(43) Date of publication of application: 14.12.2011
(73) Proprietor: ALCATEL LUCENT, 92100 Boulogne-Billancourt (FR)
(72) Inventor: FEDER, Peretz, Moshe, Englewood NJ 07631 (US); NAIR, Suresh, P., Whippany NJ 07981 (US)
(74) Representative: Wetzel, Emmanuelle
(86) International application number: PCT/US2010/023317
(87) International publication number: WO 2010/091250

(56) References cited:
- EP-A1- 1 691 568
- US-A1- 2007 010 251
- ANONYMOUS: "Part 16: Air Interface for Fixed and Mobile Broadband Wireless Access Systems; Amendment 2: Physical and Medium Access Control Layers for Combined Fixed and Mobile Operation in Licensed Bands; and Corrigendum 1." IEEE STANDARD FOR LOCAL AND METROPOLITAN AREA NETWORKS, 28 February 2006 (2006-02-28), pages 120-156, XP002579302

## Description

### RELATED APPLICATIONS

This application claims priority pursuant to 35 U.S.C. Sec 119(e) to US Provisional Application No. 61/206,870, filed February 5, 2009, entitled "MOBILITY CONTROL OF FIXED/NOMADIC MOBILES IN WIRELESS NETWORKS".

### FIELD OF THE INVENTION

The present invention generally relates to mobility procedures in a wireless communications system.

### BACKGROUND OF THE INVENTION

In current wireless technologies and standards, particularly 4G technologies such as WiMAX and LTE, certain wireless terminals may belong to the class of Fixed or Nomadic terminals, even when they support mobility among multiple base stations. Fixed/Nomadic terminals, such as Customer Premises Equipment (CPE), typically have restricted mobility or may be stationary with no mobility at all. In certain situations mobility for such Fixed/Nomadic terminals may be restricted to a part of the available wireless networks, typically involving only a limited number of base stations (BSs). These few base stations form the set of possible network re-attachment points that may be accessed due to, for example, a bad RF condition (e.g., a truck parked in front of the CPE line of sight link to the BS) or a BS malfunction.

As a matter of terminology, it is noted that the end points of the radio link in wireless communication systems are given different names in the various standards making up the wireless communication art. The generally fixed transmitter/receiver end point in the network is variously referred to as a base station, a node B, an access node, etc, while the generally mobile transmitter/receiver RF link end point used by the subscriber is variously referred to as a mobile station, user equipment, access terminal, etc. To avoid confusion herein, the generally fixed end point of that RF link will be consistently referred to as a base station or BS and the generally mobile end point of the RF link will be consistently referred to as a wireless terminal. Note also that the term wireless terminal is applied for all devices operating at the generally mobile RF link user end-point, whether such devices are fixed, have limited mobility or are fully mobile.

With respect to the mobility restrictions of Fixed/Nomadic wireless terminals, methods for enforcing the mobility restrictions in the current art, are based only on checking at a serving base station of a handoff request from the Fixed/Nomadic wireless terminal to determine whether that request for handoff to a new target BS is allowed as per a restricted BS set for a particular user (and responding to the request based on that determination). In many circumstances, this can lead to excessive RF activity which results in both unwanted interference for the wireless networks and faster battery depletion at the Fixed/Nomadic terminal.

EP 1 691 568 A1 describes a mobile communication system, a radio network controller (RNC), and a neighbor-cell-list filtering method for controlling the selection of frequencies to be used in performing hard handover in a network environment using a plurality of frequency bands and frequencies to reduce, as far as possible, the number of activations of compressed-mode operation. The RNC produces a filtered neighbor cell list by using information contained in user equipment(UE)-capability-indication information reported by a UE, and use priority data on frequencies designated by the network operator. Neighbor coll information only suitable for the handover is left in the neighbor cell list, and is notified to the UE.

In "Part 16: Air Interface for Fixed and Mobile Broadband Wireless Access Systems; Amendment 2: Physical and Medium Access Control Layers for Combined Fixed and Mobile Operation in Licensed Bands; and Corrigendum1" (IEEE standard for local and metropolitan area networks (28 February 2006), pages 120-156) a method that comprises the steps of receiving a request for authorization to scan signals from a list of proximate base stations from a wireless terminal is described.

### SUMMARY OF INVENTION

In accordance with the present invention, a method as set forth in the independent claim 1 is provided. Additional embodiments of the invention are described in the dependent claims. A method is provided for managing the mobility attempts for a Fixed/Nomadic wireless terminal so as to substantially limit those attempts to only requests for handoff to base stations within a restricted set to which handoff of the wireless terminal is permitted. In a particular embodiment, the method of the invention operates to prune the allowed BS scan list, for a particular Fixed/Nomadic wireless terminal, when the wireless terminal requests a grant of scan durations from the serving BS. Since differentiation/restriction is applied at the scanning stage itself, the mobility attempts by the Fixed/Nomadic wireless terminal is limited and much more controlled, thus reducing spurious handoff attempts that need to be rejected by the serving BS or the serving gateway.

### BRIEF DESCRIPTION OF THE FIGURES

The teachings of the present invention can be readily understood by considering the following detailed description in conjunction with the accompanying drawings, in which:
Figure 1 depicts a cluster of wireless cells surrounding a serving cell for a Fixed/Nomadic wireless terminal.
Figure 2 provides a schematic illustration for operation of the invention methodology.
Figure 3 depicts a call-flow sequence for operation of the invention methodology.

### DETAILED DESCRIPTION

In the following description, for purposes of explanation and not limitation, specific details are set forth such as particular architectures, interfaces, techniques, etc., in order to provide a thorough understanding of illustrative embodiments of the invention. However, it will be apparent to those skilled in the art that the invention may be practiced in other illustrative embodiments that depart from these specific details. In some instances, detailed descriptions of well-known devices, circuits, and methods are omitted so as not to obscure the description of described embodiments with unnecessary detail. All principles, aspects, and embodiments, as well as specific examples thereof, are intended to encompass both structural and functional equivalents thereof. Additionally, it is intended that such equivalents include both currently known equivalents as well as equivalents developed in the future.

The invention is described hereafter in terms of mobility management for wireless terminals of the Fixed/Nomadic class of terminals, which are permitted to handoff to only a limited set of base stations among a larger set of base stations for which RF signal transmission between the wireless terminal and the base station is feasible. It should be clear, however, that the invention will be applicable to mobility management for any class of wireless terminals having such restricted mobility constraints, and that the use of the illustrative case of mobility management for Fixed/Nomadic wireless terminals in the description following is solely for purposes of illustrating the invention principles, and is not in any way intended to limit the scope of the invention.

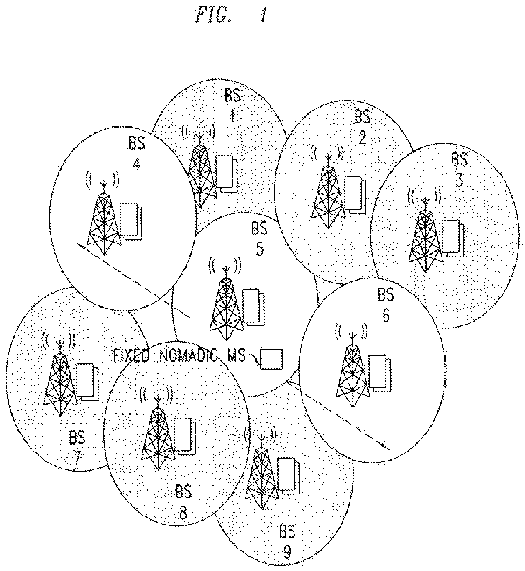

As pointed out in the Background section, certain classes of wireless terminals, such as Fixed/Nomadic terminals are restricted in the number of base stations to which they are permitted to handoff, even though the RF transmission conditions vis a vis other base stations may be otherwise acceptable for handoff. This concept is illustrated in Figure 1, which shows a Fixed/Nomadic wireless terminal located in the cell located in the center of the figure, served by base station number 5 (BS 5). In the illustrated case, the Fixed/Nomadic wireless terminal is restricted to handoff to either base station 4 (BS 4) or base station 6 (BS 6), even though the Fixed/Nomadic wireless terminal may have acceptable RF connectivity with other base stations in the vicinity of BS 5, such as BS 1, BS 2, BS 3, BS 7, BS 8, and/or BS 9.

In the current art, the wireless system standards assign to the wireless terminal the task of evaluating RF conditions between the wireless terminal and base stations with which the wireless terminal could establish or maintain an RF connection. Thus, the wireless terminal, at least initially, is in the best position to identify base stations which would constitute suitable handoff candidates for the wireless terminal, for example, one or more of base stations 1-4 and 6-9 illustrated in Figure 1.

As is known, a serving base station is aware of, and broadcasts the identity of other base stations in its geographical vicinity that might serve as handoff candidates for wireless terminals moving away from the serving base station. The listing of such neighboring base stations for a given serving base station is referred to as a *Neighbor List.* Referring again to Figure 1, the base stations designated 1-4 and 6-8 surrounding serving base station 5 might well constitute the *Neighbor List* for BS 5. Each serving base station broadcasts its own *Neighbor List* to all wireless terminals served by that base station - the *Neighbor List* including the base station ID and RF characteristics for each listed base station.

Wireless terminals receive the *Neighbor List* from their respective serving base stations and conduct a scan of the base stations in the *Neighbor List* to collect the RF information on which to base their evaluation of the RF environment between themselves and particular base stations in the *Neighbor List* (or other near-by base stations for which the wireless terminal has determined acceptable RF connectivity exists), and from which evaluation, potential handoff targets are identified.

Under current wireless standards, all wireless terminals, whether of the Fixed/Nomadic class or fully mobile, behave essentially the same in their PHY and MAC layers, and particularly in respect to handoff procedures. Specifically, all wireless terminals (full mobility and Fixed/Nomadic terminals) served by a given serving base station receive the same full *Neighbor List* broadcast by the serving base station. Accordingly, a Fixed/Nomadic wireless terminal, when it receives the *Neighbor List* from its serving base station, usually starts scanning all of the base stations in the *Neighbor List* in the same manner as would an unrestricted wireless terminal. Upon finding a base station in the *Neighbor List* having suitable RF conditions for a handoff, the Fixed/Nomadic wireless terminal generates a Handoff request directed to the current serving base station asking to move to the new target base station.

In the event, however, that the Handoff request is directed to a base station that is not included in the restricted set of base stations for which handoff for the particular Fixed/Nomadic wireless terminal is permitted, the Handoff request will be rejected. The determination of whether such a Handoff request is permitted may be carried out by the base station or by a higher layer network function - *e.g.,* Anchor Authenticator in a serving gateway (ASN-GW) for a WiMAX network or S-GW in an LTE network. In the case of such a Handoff request from a Fixed/Nomadic wireless terminal to a base station outside the restricted list, the wireless network still must process the Handoff request, including signaling the wireless terminal that the request is rejected, leading to unwanted RF activity and an increase in overall interference in the network.

The inventors have developed, and disclose herein, a method to effect control of the wireless terminal's mobility attempts during the neighbor scanning process itself. This is achieved through the pruning of the allowed base station scan list, for a particular wireless terminal, when it requests a grant of scan durations from the serving base station. Since this process is carried out specific to a given wireless terminal, a fine control, specific to the wireless terminal identity - *i.e.*, Fixed/Nomadic or fully mobile -- is possible, while, in contrast, the *Neighbor List* broadcast information is too broad (as it serves fully mobile wireless terminals in addition to the Fixed/Nomadic terminals). As a result of applying the differentiation/restriction criteria for the Fixed/Nomadic wireless terminal at the scanning stage itself (*i.e.*, instructing the Fixed/Nomadic terminal at the scanning stage of the base stations it is allowed to access) the mobility attempts by the Fixed/Nomadic terminal are limited to only those base stations within its restricted set, thus reducing spurious handoff attempts that need to be rejected by the serving base station or the serving gateway. On the network side, since spurious handoff attempts are reduced, processing cycles of these messages are saved. On the air interface, this method increase capacity since rejected signaling attempts will be reduced.

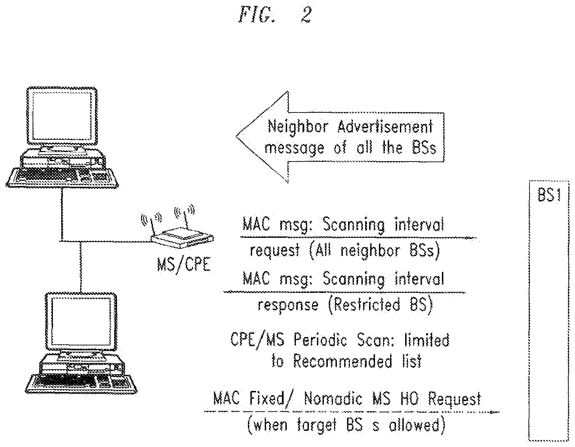

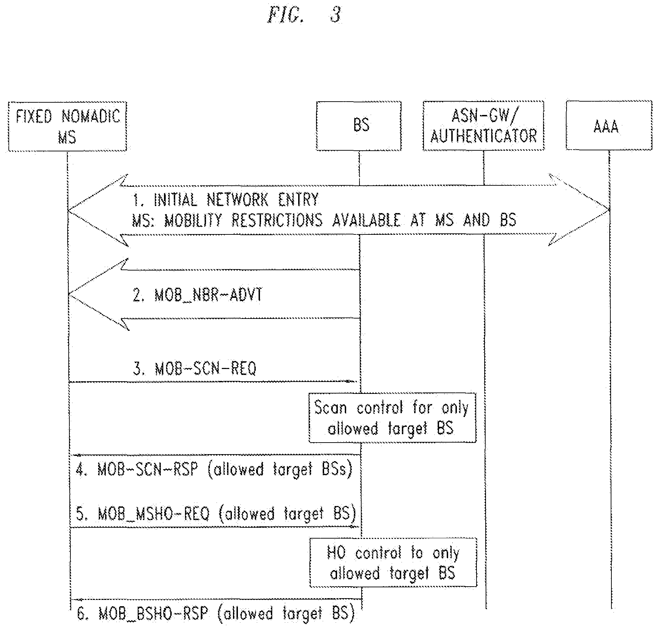

The steps of the invention methodology are illustrated in Figures 2 and 3. Figure 2 provides a schematic illustration directed to the processing of scanning and handoff requests for a wireless terminal having a restricted list of allowed handoff base stations, such as a Fixed/Nomadic wireless terminal. It is noted that the message designations in Figure 2 are specific to a WiMAX system, but the concepts are equally applicable to other wireless system standards. The corresponding designations for comparable message functions in other standards will be well known to those of skill in the art of the invention. Figure 3 is a call-flow diagram showing the call-flow steps in that same process.

With reference to those figures, as indicated in step 1 of Figure 3, a wireless terminal's class (full mobility or Fixed/Nomadic) being known to the authentication server for a network to which the wireless terminal seeks attachment, that class information is obtained by the authentication server as part of the authentication and authorization process at the point of initial network entry for the wireless terminal. The class information for the given Fixed/Nomadic wireless terminal is then provided by the authentication server to the network and serving base station as part of context for the given Fixed/Nomadic wireless terminal. The base station and gateway serving the Fixed/Nomadic wireless terminal store and maintain this class information in the active context state information for the given Fixed/Nomadic wireless terminal.

In step 2 of Figure 3, also illustrated in Figure 3 as the "Neighbor Advertisement message," the serving base station broadcasts its *Neighbor List* to all served wireless terminals and mobile stations. Following receipt of the *Neighbor List* from the serving base station, a given wireless terminal, illustratively a Fixed/Nomadic wireless terminal, sends a request to the serving base station for a scanning interval authorization, as shown in step 3 of Figure 3, and illustrated as "MAC msg: Scanning interval request" in Figure 2 (noting again that the message labels in Figure 2 are specific to a particular wireless standard, and that comparable messages are provided in other wireless standards). In the event that the wireless terminal has identified other nearby base stations not in the serving base station's *Neighbor List* that provide acceptable RF connectivity for the wireless terminal, these other base stations may also be identified in the scanning request.

At this point, the serving base station determines the class of the wireless terminal, such as fully-mobile or Fixed/Nomadic as stored in the context information for that terminal. If the wireless terminal is of the Fixed/Nomadic class, the serving base station (or higher-level network function) determines the list of allowed base stations to which the Fixed/Nomadic wireless terminal is permitted to connect. Based on a determination that the allowed target base stations for the wireless terminal are restricted, the serving base station then prunes its *Neighbor List* to form a specific Scan list of base stations for the wireless terminal and allocates scanning slots only for target base stations allowed for requesting wireless terminal. A response is then sent from the serving base station to the requesting wireless terminal providing a Scan list of the pruned target base stations (which are authorized for scanning by the requesting wireless terminal) along with scanning slot authorization for the allowed target base stations -- as shown in step 4 of Figure 3 and illustrated as "MAC msg: Scanning interval response" in Figure 2. Note that while the transmission of the pruned scan list is required, and preferably sent with scan slot authorization, for the case of wireless terminals having restricted mobility, such a listing of allowed target base stations may or may not be needed in respect to responses for scan requests from fully mobile wireless terminals. Nothing in the herein description of the invention should be construed to require the transmission of a listing of allowed target base stations for fully mobile wireless terminals.

For the illustrated case of a Fixed/Nomadic wireless terminal, the terminal then scans signals from base stations in the set of the restricted Scan list of base stations provided in the scanning interval response message from the serving base station, as illustrated in the "CPE/MS Periodic Scan" step of Figure 2. Upon finding a base station from the Scan list (of restricted base stations) having suitable RF conditions for a handoff, the Fixed/Nomadic wireless terminal generates a Handoff request directed to the current serving base station asking to move to the new target base station, as shown in step 5 of Figure 3 and illustrated as "MAC: Fixed/Nomadic MS HO Request" in Figure 2.

Upon receipt of the Handoff request from the Fixed/Nomadic wireless terminal, the serving base station checks and performs handoff control based on mobility restrictions applicable to the requesting wireless terminal, and then sends a response back to the requesting wireless terminal either granting or rejecting the Handoff request, as shown in step 6 of Figure 3.

Herein, the inventors have disclosed a method for improved mobility management for wireless terminals being limited to fewer handoff target base stations than the full *Neighbor List* for a given serving base station. Numerous modifications and alternative embodiments of the invention will be apparent to those skilled in the art in view of the foregoing description.

## Claims

1. A method in wireless communication for management of mobility for wireless terminals operative to scan signals from a plurality of base stations (1-4; 6-9) geographically proximate to a serving base station (5) for the wireless terminals, the method comprising:
receiving from a wireless terminal a request for authorization to scan signals from an identified grouping of the proximate base stations (1-4; 6-9), wherein the identified grouping of the proximate base stations comprises base stations of the plurality of base stations and other nearby base stations provided by the wireless terminal that provide acceptable RF, radio frequency, connectivity for the wireless terminal;
determining a mobility class for the requesting wireless terminal;
in the case of the mobility class of the requesting wireless terminal being restricted, pruning the identified grouping of proximate base stations (1-4; 6-9) to eliminate base stations (1-3; 7-9) for which connection is not permitted by the wireless terminal restriction;
sending to the requesting wireless terminal a scan list including base stations (4; 6) remaining after the pruning step.

2. The method of claim 1 wherein, upon action by the wireless terminal to scan base stations (4; 6) in the scan list and sending a handoff request to the serving base station (5) respecting at least one of the scan-list base stations (4; 6), evaluating the handoff request for consistency with the wireless terminal restriction.

3. The method of claim 2 wherein the serving base station (5) sends a handoff authorization to the requesting wireless terminal.

4. The method of claim 1 wherein, upon determining that at least one of the scanned base stations (4; 6) provides acceptable RF connectivity for the wireless terminal, sending a handoff request to the serving base station (5).

5. The method of claim 1 wherein, upon receiving the scan list, the requesting wireless terminal scans signals from base stations in the scan list.

## Patentansprüche

1. Verfahren im Bereich der drahtlosen Kommunikation für das Mobilitätsmanagement drahtloser Endgeräte, wobei das Verfahren dafür ausgelegt ist, um für die drahtlosen Endgeräte Signale von einer Vielzahl von Basisstationen (1-4; 6-9) in geografischer Nähe zu einer bedienenden Basisstation (5) zu scannen, wobei das Verfahren umfasst:
den Empfang einer Anfrage eines drahtlosen Endgeräts zum Autorisieren des Scannen von Signalen von einer identifizierten Gruppierung der in der Nähe gelegenen Basisstationen (1-4; 6-9), wobei die identifizierte Gruppierung der in der Nähe gelegenen Basisstationen Basisstationen aus der Vielzahl von Basisstationen und weitere in der Nähe gelegene Basisstationen umfasst, die von einem drahtlosen Endgerät zur Verfügung gestellt werden und die eine annehmbare Funkfrequenz-Konnektivität (Radio Frequency, RF) für das betreffende drahtlose Endgerät bieten;
das Bestimmen einer Mobilitätsklasse für das anfragende mobile Endgerät;
falls die Mobilitätsklasse des anfragenden mobilen Endgeräts beschränkt ist, das Eingrenzen der identifizierten Gruppierung in der Nähe gelegener Basisstationen (1-4; 6-9) zum Eliminieren solcher Basisstationen (1-3; 7-9), für welche die Verbindung aufgrund der Beschränkung des drahtlosen Endgeräts nicht zulässig ist;
das Senden einer Scan-Liste an das anfragende drahtlose Endgerät, welche die nach dem Schritt des Eingrenzens verbleibenden Basisstation (4; 6) umfasst.

2. Das Verfahren nach Anspruch 1, nach erfolgtem Scannen in der Scan-Liste enthaltener Basisstationen (4; 6) durch das mobile Endgerät und nach dem Senden einer sich auf mindestens eine der Basisstationen (4; 6) auf der Scan-Liste beziehenden Weitergabeanfrage an die bedienende Basisstation (5) durch das mobile Endgerät, das Evaluieren der Weitergabeanfrage hinsichtlich ihrer Vereinbarkeit mit der Beschränkung des drahtlosen Endgeräts umfassend.

3. Das Verfahren nach Anspruch 2, wobei die bedienende Basisstation (5) eine Weitergabeautorisierung an das anfragende mobile Endgerät sendet.

4. Das Verfahren nach Anspruch 1, nach dem Bestimmen, dass mindestens eine der gescannten Basisstationen (4; 6) eine annehmbare RF-Konnektivität für das mobile Endgerät bietet, das Senden einer Weitergabeanfrage an die bedienende Basisstation (5) umfassend.

5. Das Verfahren nach Anspruch 1, wobei das anfragende drahtlose Endgerät nach dem Empfang der Scan-Liste Signale von Basisstationen aus der Scan-Liste scannt.

## Revendications

1. Procédé dans une communication sans fil pour la gestion de mobilité pour des terminaux sans fil opérant pour balayer des signaux en provenance d'une pluralité de stations de base (1-4 ; 6-9) géographiquement proches d'une station de base de desserte (5) pour les terminaux sans fil, le procédé comprenant les étapes suivantes :
recevoir en provenance d'un terminal sans fil une demande d'autorisation pour balayer des signaux en provenance d'un groupement identifié des stations de base proches (1-4 ; 6-9), le groupement identifié des stations de base proches comprenant des stations de base de la pluralité de stations de base et d'autres stations de base avoisinantes fournies par le terminal sans fil qui fournissent une connectivité de radiofréquence, RF, acceptable pour le terminal sans fil ;
déterminer une classe de mobilité pour le terminal sans fil demandeur ;
dans le cas où la classe de mobilité du terminal sans fil demandeur est restreinte, élaguer le groupement identifié de stations de base proches (1-4 ; 6-9) pour éliminer des stations de base (1-3 ; 7-9) pour lesquelles la connexion n'est pas permise par la restriction du terminal sans fil ;
envoyer au terminal sans fil demandeur une liste de balayage incluant des stations de base (4 ; 6) restant après l'étape d'élagage.

2. Procédé selon la revendication 1, dans lequel, lors de l'action par le terminal sans fil de balayer des stations de base (4 ; 6) dans la liste de balayage et l'envoi d'une demande de transfert à la station de base de desserte (5) concernant au moins une des stations de base de la liste de balayage (4 ; 6), évaluer la demande de transfert pour la compatibilité avec la restriction du terminal sans fil.

3. Procédé selon la revendication 2, dans lequel la station de base de desserte (5) envoie une autorisation de transfert au terminal sans fil demandeur.

4. Procédé selon la revendication 1, dans lequel, lors de la détermination selon laquelle au moins une des stations de base balayées (4 ; 6) fournit une connectivité RF acceptable pour le terminal sans fil, envoyer une demande de transfert à la station de base de desserte (5).

5. Procédé selon la revendication 1, dans lequel, lors de la réception de la liste de balayage, le terminal sans fil demandeur balaie des signaux en provenance de stations de base dans la liste de balayage.
